# EUROPÄISCHE PATENTSCHRIFT

(11) **EP 1 480 511 B1**
(45) Veröffentlichungstag und Bekanntmachung des Hinweises auf die Patenterteilung: **20.12.2006**
(21) Anmeldenummer: 03742577.4
(22) Anmeldetag: 24.02.2003
(51) Int. Cl.: A01J 5/04

(54) **MILCHSAMMELSTUCK MIT EINEM KNICKSTELLENELEMENT ZUM DEFINIERTEN ABKNICKEN EINES MILCHSCHLAUCHS**
MILK COLLECTING PIECE WITH A KINK ELEMENT FOR DEFINING KINKING OF A MILK TUBE
PIECE COLLECTRICE DE LAIT COMPORTANT UN ELEMENT DE SUPPORT DE POINT DE COURBURE PERMETTANT UNE COURBURE DEFINIE D'UN TUYAU FLEXIBLE A LAIT

(30) Priorität: 25.02.2002 DE 10207955
(43) Veröffentlichungstag der Anmeldung: 01.12.2004
(73) Patentinhaber: Maier, Jakob, Jun., 86842 Türkheim (DE); Hatzack, Wilfried, 86842 Türkheim (DE)
(72) Erfinder: Maier, Jakob, Jun., 86842 Türkheim (DE); Hatzack, Wilfried, 86842 Türkheim (DE)
(74) Vertreter: Grünecker, Kinkeldey, Stockmair & Schwanhäusser Anwaltssozietät
(86) Internationale Anmeldenummer: PCT/EP2003/001866
(87) Internationale Veröffentlichungsnummer: WO 2003/069981

(56) Entgegenhaltungen:
- WO-A-00/69252
- DE-A- 1 607 023
- US-A- 4 869 205

## Beschreibung

Die vorliegende Erfindung betrifft in der Landwirtschaft verwendete automatische Melkanlagen und betrifft insbesondere ein Milchsammelstück mit mehreren Anschlussbereichen für flexible Milchschläuche, wobei in dem Milchsammelstück eine Längsachse definiert ist, und wobei Milchschläuche am Sammelstück schräg zur Längsachse angebracht sind. Ferner betrifft die vorliegende Erfindung ein Knickstellenelement für ein Milchsammelstück (siehe DE-A-1607023).

Beim maschinellen Melken von Tieren, beispielsweise von Kühen, werden überwiegend mit Vakuum betriebene automatische Melkanlagen verwendet, in denen über an den Zitzen der Tiere angebrachte Melkbecher, die mittels Milchschläuchen mit einem sogenannten Milchsammelstück verbunden sind, die ermolkene Milch in einen zentralen Behälter oder in eine zentrale Leitung geleitet wird. Bei diesem maschinellen Melkvorgang ist es für den Landwirt wichtig, zum einen eine dauerhaft hohe Milchausbeute zu erreichen, und zum anderen die strengen hygienischen Auflagen zu erfüllen, die der Gesetzgeber dem Milcherzeuger vorschreibt. Folglich ist es wichtig, dass die Funktionalität der automatischen Melkanlage sowohl ein hohes Maß an Wohlbefinden für das zu melkende Tier bereitstellt, wodurch eine hohe Ausbeute gewährleistet ist, als auch einen Aufbau aufweist, der eine rasche und effiziente Reinigung der Anlage zulässt.

Ein wichtiges Bestandteil der automatischen Melkanlage ist das Milchsammelstück, in dem die von den einzelnen Zitzen des Tiers ermolkene Milch zusammengeführt und anschließend in eine zentrale Leitung weitertransportiert wird. Das Milchsammelstück ist mittels flexibler Milchschläuche mit den entsprechenden Melkbechem verbunden, und hängt während des Melkens durch das Eigengewicht bedingt unterhalb des Euters des Tiers. Durch die enge mechanische Kopplung des Milchsammelstücks mittels der flexiblen Milchschläuche an das Euter des Tieres beeinflussen die Eigenschaften des Milchsammelstücks sowie die entsprechenden Anschlussbereiche zu den Milchschläuchen das Betriebsverhalten und damit die Effizienz der automatischen Melkanlage. Insbesondere treten während des Melkens aufgrund der durch den gepulsten Betrieb der Melkanlage erzeugten Druckschwankungen, die für das Einfalten bzw. das Entfalten des Zitzengummis im Melkbecher erforderlich sind, eine entsprechende Bewegung des Milchsammelstücks auf. Je nach Auslegung des Milchsammelstücks sowie der Milchschläuche kann eine Bewegung des Milchsammelstücks positiv zur Stimulation des Tieres verwendet werden, oder aber es findet eine Beeinträchtigung des Melkvorgangs statt, da gewisse Bewegungen von dem Tier als unangenehm empfunden und damit zu einer vorzeitigen Kontraktion der entsprechenden Muskulatur und damit zu einem vorzeitigen Ende des Milchstroms führen können.

Eine weitere kritische Situation beim Melkvorgang entsteht, wenn ein Melkbecher von der Zitze abfällt oder, wenn bei Beginn oder Beendigung des Melkvorgangs die Melkbecher an der Zitze anzulegen oder von dieser zu entfernen sind. Da an jedem Melkbecher das Melkvakuum anliegt, das im wesentlichen möglichst konstant bleiben soll, führt ein Abnehmen bzw. ein Abfallen des Melkbechers zu einem Einbruch des Melkvakuums, der wiederum ein Abfallen der restlichen Melkbecher zur Folge haben kann. Dies ist auch beim Abnehmen des Melkbechers problematisch, da in der Regel nicht alle Melkbecher gleichzeitig entfernt werden können, so dass jederzeit die Gefahr besteht, dass die sich noch in Betriebsstellung befindlichen Melkbecher abfallen und somit verschmutzt werden. Aufgrund dieser Problematik sind in vielen bestehenden Melkanlagen die Milchsammelstücke so ausgebildet, dass die flexiblen Milchschläuche, die unter dem Gewicht des Melkbechers nach unten hängen, definiert abknicken und dabei im wesentlichen eine vakuumdichte Knickstelle bilden, so dass das Melkvakuum an den übrigen Melkbechers kaum beeinträchtigt wird.

In einer bekannten Melkanlage ist das Milchsammelstück so ausgebildet, dass auf der Oberseite des Milchsammelstücks Austrittsöffnungen für die Milchschläuche vorhanden sind, die somit das Milchsammelstück im wesentlichen senkrecht verlassen, so dass sich während des Betriebs ein maximaler Innendurchmesser für den Abtransport der ermolkenen Milch ergibt. Des weiteren ist an dem Milchschlauch beabstandet von der Öffnung eine Sollknickstelle vorgesehen, die durch eine reduzierte Wandstärke des Schlauchs eine erhöhte Flexibilität des Milchschlauchs erzeugt. Ferner ist in der Nähe der Öffnung ein Knickbügel vorgesehen, so dass bei herabhängendem Melkbecher die Sollknickstelle des Milchschlauchs über der Bügelkante liegt, und damit ein definiertes Abknicken und im wesentlichen auch ein Abdichten des Milchschlauchs gewährleistet. Die vertikale Lage des Milchschläuche in der Betriebsstellung führt jedoch während des Melkvorgangs dazu, dass kleine vertikale und auch laterale Bewegungen des Milchsammelstücks, die beispielsweise durch die zuvor erwähnten Druckschwankungen erzeugt werden, sich unmittelbar auf die Zitze des Tieres auswirken. Dies führt ferner dazu, dass auch geringfügige Lageänderungen des Milchsammelstücks an einer bestimmten Zitze, beispielsweise beim "Hochklettern" des Melkbechers, sich auf das Milchsammelstück und somit unmittelbar auch auf die anderen Zitzen auswirken. Dies kann einen deutlichen negativen Einfluss auf das Wohlbefinden des Tieres und damit auf den Milchertrag zur Folge haben. Des weiteren sind in dieser bekannten Melkanlage die Knickbügel sehr nahe an den die Milchschläuche aufnehmenden Öffnungen angebracht, so dass bei einer Montage bzw. Demontage der Milchschläuche ein erheblicher Zeitaufwand und große Mühe erforderlich ist. Dies führt dazu, dass die Bereitschaft, die Milchschläuche für eine gründliche Reinigung zu entfernen, deutlich reduziert ist.

In einem weiteren bekannten Milchsammelstück sind beispielsweise Anschlussstutzen für die Milchschläuche vorgesehen, wobei die Anschlussstutzen schräg im Hinblick auf eine Längsachse des Milchsammelstücks angeordnet sind. In diesem Zusammenhang soll erwähnt werden, dass in der weiteren Beschreibung sowie in den Ansprüchen die Längsachse eines Milchsammelstücks definiert ist als eine Achse, die mit der Vertikalen übereinstimmt, wenn das Milchsammelstück in der Betriebsstellung ist und keine Bewegung ausführt. Die Betriebsstellung ist definiert als die Stellung, in der das Milchsammelstück mittels der Milchschläuche und den Melkbechern an dem Euter des Tieres befestigt und aufgrund des Eigengewichts des gesamten Melkzeugs senkrecht nach unten hängt.

Die schräg zur Längsachse angebrachten Anschlussstutzen ergeben zusammen mit entsprechend ausgebildeten Milchschläuchen, die beispielsweise über einen Bereich mit einer balgähnlichen Struktur verfügen können, eine dämpfende Wirkung für seitliche Bewegung und auch für Bewegungen entlang der Längsachse. Diese dämpfende Wirkung wird durch eine Biegung der Milchschläuche bewirkt, die durch die schräge Anordnung der Anschlussstutzen erzwungen wird. Ferner dient das Ende des Anschlussstutzens zugleich als Knickkante, so dass eine deutliche Verformung des Innendurchmessers stattfindet, wenn der Milchschlauch, beispielsweise durch das Eigengewicht des Melkbechers, nach unten gezogen wird. Es zeigt sich allerdings, dass oft keine zuverlässige absolute Abdichtung des Milchschlauchs erreicht wird, da insbesondere auf eine ausgeprägte Sollknickstelle im Schlauch verzichtet wird, um die dämpfende Wirkung der Schlauchbiegung beim Melkvorgang nicht zu beeinträchtigen. Ferner erweist es sich, dass beim Abknicken des Melkschlauchs sich dieser teilweise an der Unterseite des Anschlussstutzens ablöst, so dass sich dort Milchreste ansammeln können, die ein Gefahrenpotential für den Hygienezustand der Milch darstellen können. Dies gilt insbesondere, da sich beim Reinigen der Melkanlage der Milchschlauch im nicht geknickten Zustand befindet und somit der in Frage kommende Bereich am Anschlussstutzen nicht gereinigt wird.

Aufgrund der oben dargestellten Situation ist es eine Aufgabe der vorliegenden Erfindung, eine Verbesserung in einer automatischen Melkanlage durchzuführen, dahingehend, dass der Melkvorgang effizienter stattfinden kann, insbesondere beim Anlegen und Abnehmen der Melkbecher, und die Anforderungen an den Hygienestandard einfacher zu erfüllen sind.

Diese Aufgabe wird erfindungsgemäß gelöst durch ein Milchsammelstück gemäß Anspruch 1.

Durch das erfindungsgemäße Milchsammelstück lassen sich die Vorteile einer schrägen Befestigung der flexiblen Milchschläuche an dem Milchsammelstück mit einer genau definierten Biegekante kombinieren, so dass die dämpfende Wirkung der beim Melkvorgang nach oben gekrümmten flexiblen Milchschläuche bestehen bleibt, und wobei andererseits durch die vom Abschlussbereich beabstandete Biegekante genau ein Biegebereich bzw. Abknickbereich im Milchschlauch definiert ist, so dass eine zuverlässige vakuumdichte Abschnürung des Milchschlauchs erfolgt. Im Gegensatz zu dem bekannten Milchsammelstück mit schrägem Anschlussstutzen, in der das gesamte Ende des Anschlussstutzens als Biegebereich dient und somit keinen exakten Biegebereich des Milchschlauchs definiert, erlaubt die Biegekante der vorliegenden Erfindung ein definiertes Abknicken, wobei der Innendurchmesser sich derart verformt, dass obere und untere Bereiche des Milchschlauchs aufeinanderliegen oder zumindest so nahe beabstandet sind, dass diese durch das anstehende Melkvakuum gänzlich und dicht aufeinander haften.

In einer weiteren Ausführungsform schließen erste am Milchsammelstück anbringbare Endbereiche der Milchschläuche einen Winkel von mehr als 10° mit der Längsachse in der Richtung, die durch die Betriebsstellung des Milchsammelstücks definiert ist, ein.

Durch einen Winkelbereich von mehr als 10°, d.h., wenn die Endbereiche der Milchschläuche einen Winkel von mehr als 10° mit der nach oben gerichteten Vertikalen einschließen, wenn sich das Milchsammelstück in der Betriebsstellung befindet, wird eine ausreichende Krümmung des Milchschlauchs während des Melkvorgangs erreicht, so dass die dämpfende bzw. ausgleichende Wirkung des Milchschlauchs auf unkontrollierte Bewegungen des Milchsammelstücks zur Entfaltung kommt. Vorzugsweise beträgt der Winkel 30° bis 70°.

Aufgrund dieser Ausgestaltung kann jede Biegekante von der Betriebsposition in eine zweite Position gebracht werden, in der die Milchschläuche rasch montierbar bzw. demontierbar sind. Somit ist für den Anwender eine gründliche Reinigung des Milchschlauchs sowie der Anschlussbereiche des Milchsammelstücks einfach und schnell ausführbar.

In einer weiteren Ausführungsform ist das Knickstellenelement so bewegbar, dass einige oder alle der mehreren Biegekanten gleichzeitig von der ersten Position in die zweite Position bewegbar sind.

Diese Ausführungsform erlaubt eine noch raschere Montage bzw. Demontage der Milchschläuche für eine gründliche Reinigung oder für einen Austausch der Milchschläuche.

Entsprechend einer Ausführungsform ist das Knickstellenelement drehbar an dem Milchsammelstück befestigt. Dadurch ist eine einfache mechanische Konstruktion möglich, die es beispielsweise erlaubt, das Knickstellenelement als Ringelement oder Ringsegmentelement auszuführen, wobei durch Drehung des Knickstellenelements die Biegekanten von der ersten Position in die zweite Position bewegbar sind.

In einer bevorzugten Ausführungsform ist das Knickstellenelement entfembar an dem Milchsammelstück befestigt. Dadurch kann das Knickstellenelement in einfacher Weise demontiert werden, wobei an dem Milchsammelstück keine oder nur geringe bauliche Maßnahmen für das Anbringen des Knickstellenelements erforderlich sind. Dies ist insbesondere vorteilhaft, wenn das Knickstellenelement an bereits bestehenden Milchsammelstücken vorzusehen ist.

In einer weiteren Ausführungsform ist das Knickstellenelement von der ersten Position in die zweite Position vertikal, in Bezug zur Betriebsstellung, verschiebbar.

Diese Ausführungsform erlaubt ein einfaches Anbringen des Knickstellenelements, wobei die Haftung beispielsweise durch Reibung ausreichend sein kann, so dass gegebenenfalls an bestehenden Milchsammelstücken nur geringe oder gar keine baulichen Änderungen bzw. Maßnahmen notwendig sind. Durch beispielsweise vertikales Verschieben kann die Lage des Knickstellenelements sodann schnell verändert werden.

In einer weiteren Ausführungsform umfasst das Knickstellenelement mehrere Biegekantenhaltesegmente.

In einer weiteren Ausführungsform ist jedes Biegekantenhaltesegment bewegbar an dem Knickstellenelement angebracht.

Gemäß dieser Ausführungsform kann jede Biegekante individuell bewegt werden, beispielsweise von der ersten Position in die zweiten Position, so dass ein rascher Zugriff auf einen einzelnen Milchschlauch möglich ist, ohne den mechanischen Aufbau der restlichen Milchschläuche sowie Biegekantenhaltesegmente zu beeinflussen.

In einer weiteren Ausführungsform umfasst jedes Biegekantenhaltesegment einen Dreh- und/oder Klappmechanismus oder jedes Biegekantenhaltesegment ist verschiebbar, so dass jedes Biegekantenhaltesegment von der ersten Position in die zweite Position bewegbar ist. Diese Ausführungsform erlaubt einen einfachen mechanischen Aufbau, wobei die einzelnen Biegekanten schnell und problemlos von der ersten Position in die zweite Position bewegbar sind.

In einer weiteren Ausführungsform umfasst das Knickstellenelement ein Arretierungsmittel, mit dem jedes Biegekantenhaltesegment in der ersten Position arretierbar ist. Das Arretierungsmittel gewährleistet einen zuverlässigen Halt der Biegekanten in der ersten Position, so dass die Funktion der Biegekante während des Melkvorgangs sowie während des Abnehmens und Anlegens der Melkbecher sichergestellt ist.

Vorzugsweise ist das Arretierungsmittel ausgebildet, alle Biegenkantenhaltesegmente gleichzeitig in der ersten Position zu arretieren.

In einer weiteren Ausführungsform umfasst das Knickstellenelement einen verformbaren Bereich, so dass das Knickstellenelement durch Verformung des verformbaren Bereichs entfembar an dem Milchsammelstück befestigbar und/oder in der ersten Position arretierbar ist.

Durch die Bereitstellung eines verformbaren Bereichs, beispielsweise in Form eines elastischen Bereichs oder eines Federelements, das das Knickstellenelement teilweise umfasst, kann das Knickstellenelement einfach und zuverlässig an dem Milchsammelstück, beispielsweise in der ersten Position, befestigt werden. Ferner lässt sich mit dieser Ausführungsform beispielsweise die Form und damit der Bereich, der mit dem Milchsammelstück in Kontakt ist, verändern, so dass in einfacher Weise ein Bewegen bzw. ein Montieren des Knickstellenelements möglich ist.

Vorzugsweise ist ein Verschlusselement zur lösbaren Befestigung des Knickstellenelements vorgesehen.

Durch das Verschlusselement können zum Beispiel zwei Teilbereiche, beispielsweise in Form von halbringförmigen Segmenten, zuverlässig verbunden werden, wodurch sich eine mechanisch einfache Konstruktion ergibt, die schnell und zuverlässig funktioniert.

In einer weiteren Ausgestaltung sind zumindest zwei Teilbereiche vorgesehen, die relativ zueinander mittels eines die beiden Teilbereiche verbindenden verformbaren Bereichs bewegbar sind.

In einer weiteren Ausführungsform weist der verformbare Bereich ein elastisches Material und/oder eine Schamierelement und/oder einen Klappmechanismus auf. Auf diese Weise ergibt sich ein mechanisch einfache Lösung zur Befestigung bzw. zur Bewegung des Knickstellenelements. Beispielsweise kann das Knickstellenelement in Form einer Schelle mit Scharnier ausgebildet sein.

In einer weiteren Ausführungsform weist das Knickstellenelement einen elastischen Grundkörper und daran befestigte Biegekantenhaltesegmente auf. Der elastische Grundkörper kann beispielsweise aus einem elastischen Band, einem Kunststoff, einem Metall, etc. bestehen, wobei die Biegekantenhaltesegmente aus dem gleichen Material oder aus einem anderem Material als der Grundkörper hergestellt sein können. Bei Verwendung des gleichen Materials werden die Biegekantensegmente vorzugsweise mit einer größeren Materialstärke hergestellt, so dass die Biegekantensegmente eine mechanisch relativ starre Biegekante bereitstellen.

In einer weiteren Ausführungsform ist der elastische Grundkörper so ausgebildet, dass eine Längenänderung und/oder eine Formänderung und/oder eine Torsionsbewegung im elastischen Grundkörper möglich ist. Aufgrund dieser Eigenschaft des elastischen Grundkörpers kann das Knickstellenelement in einfacher Weise an dem Milchsammelstück befestigt werden, wobei beispielsweise durch eine Torsion in einem Teilbereich des Grundkörpers ein Überführen eines einzelnen oder mehrerer Biegekantenhaltesegmente von der ersten Position in die zweite Position möglich ist.

In einer weiteren Ausführungsform umfasst das Milchsammelstück einen Anschlussstutzen in jedem Anschlussbereich, wobei die Biegekante vor dem Anschlussstutzen so positioniert ist, dass bei einer mit Bezug zur Längsachse und der Betriebsstellung nach unten gerichteten Kraft auf den Milchschlauch dieser entlang der Biegekante abknickt, ohne sich vom Anschlussstutzen abzulösen.

Durch diese Ausführungsform wird die eingangs erwähnte Benetzung des Anschlussstutzens an der Anschlussstutzenunterseite aufgrund der erfindungsgemäßen Biegekante verhindert, so dass die Gefahr einer Keimbildung in diesem Bereich deutlich reduziert ist.

Vorteilhafterweise weist die Biegekante einen Abstand zum Anschlussstutzenrand von etwa 1 mm bis 15 mm auf. Mit einem derartigen Abstand ist ein Ablösen des Milchschlauchs von der Unterseite des Anschlussstutzens beim Abknicken des Milchschlauchs zuverlässig zu verhindern.

In einer weiteren Ausgestaltung ist das Knickstellenelement rohrförmig ausgebildet und im Anschlussbereich am Milchschlauch lösbar anbringbar. Durch die rohrförmig Ausbildung des Knickstellenelements kann dieses um den Anschlussstutzen herum angebracht werden, so dass eine rasche und zuverlässige Installation möglich ist. Vorzugsweise ist dabei die Biegekante als ein von den rohrförmigen Bereich abstehender Teil mit gerader Kante ausgebildet.

Vorzugsweise weist das Knickstellenelement zwei Formteile und ein Verschlusselement auf. Dadurch kann das rohrförmige Knickstellenelement rasch und zuverlässig montiert werden.

In einer weiteren bevorzugten Ausführungsform weist jeder Anschlussbereich eine Fläche mit einer Öffnung zur Aufnahme des Milchschlauchs auf.

Das Milchsammelstück dieser Ausführungsform besitzt somit keine Anschlussstutzen, so dass die Gefahr der Keimbildung, die bei Milchsammelstücken mit Anschlussstutzen immer gegeben ist, deutlich verringert ist.

In einer weiteren Ausführungsform weist das Milchsammelstück einen Milchschlauch auf, wobei der Milchschlauch an dem in die Öffnung einzuführenden ersten Endbereich einen Einschnitt zumindest teilweise um den Umfang des Milchschlauchs herum aufweist.

Mit dieser konstruktiven Gestaltung des Milchschlauchs ist gewährleistet, dass ein zuverlässiger Halt des Milchschlauchs in der Öffnung stattfindet, da der Öffnungsrand mit dem Einschnitt in Eingriff ist und eine axiale Bewegung des Milchschlauchs verhindert.

In einer weiteren Ausbildung ist der Außendurchmesser des Milchschlauchs an dem in die Öffnung einzuführenden ersten Endbereich zumindest im Bereich des Einschnitts größer als im mittleren Bereich des Milchschlauchs.

Durch den vergrößerten Außendurchmesser ergibt sich eine erhöhte Stabilität und Lebensdauer des Milchschlauchs, da im Bereich der Öffnung ständig kleine Verformungen mit einem entsprechenden Verschleiß stattfinden, der somit durch die größere Materialstärke vernachlässigbar ist.

In einer weiteren Ausführungsform weist das Knickstellenelement eine dem Milchschlauch zugewandte Schmiegefläche auf.

Durch diese Schmiegefläche wird eine erhöhte mechanische Stabilität des Endbereichs des Milchschlauchs erreicht. Ferner kann die Schmiegefläche dem Radius des Milchschlauchs angepasst sein, so dass sich eine verbesserte Führung des Milchschlauchs ergibt, wenn seitliche Kräfte auf den Milchschlauch einwirken.

Vorzugsweise weist der Milchschlauch eine balgähnliche Struktur auf, die eine Krümmung des Milchschlauchs ohne wesentliche Verringerung des Innendurchmessers ermöglicht. Die balgähnliche Struktur erlaubt ein besseres Krümmungsverhalten bei dennoch ausreichender Stabilität des Milchschlauchs, wodurch die dämpfende bzw. ausgleichende mechanische Wirkung während des Melkvorgangs unterstützt wird. Ferner kann durch die balgähnliche Struktur eine gezielte stimulierende Bewegung, die beispielsweise von einem Stimulationselement hervorgerufen wird, an die Zitzen übertragen werden. Dies wird zum einen durch das bessere Krümmungsverhalten des Milchschlauchs durch die balgähnliche Struktur, und zum anderen durch die Eigenschaft der balgähnlichen Struktur, eine gewisse Beweglichkeit in axialer Richtung zu zeigen, unterstützt.

Vorteilhafterweise ist die Biegekante so positioniert, dass bei einer hinsichtlich der Betriebsstellung nach unten gerichteten auf den Milchschlauch wirkenden Kraft die Biegekante am Übergang vom unstrukturierten Bereich zum balgähnlichen Bereich oder im balgähnlichen Bereich mit dem Milchschlauch in Berührung ist.

Auf diese Weise ist gewährleistet, dass beim Abknicken des Milchschlauchs ein maximal flexibler Bereich des Milchschlauchs beteiligt ist.

Gemäß einem weiteren erfindungsgemäßen Aspekt wird ein Knickstellenelement gemäß Anspruch 32 zur Verwendung mit einem Milchsammelstück mit schräg angeordneten Anschlussbereich bereitgestellt.

Durch das Bereitstellen eines montierbaren Knickstellenelements ist es möglich, in einfacher Weise bereits vorhandene Milchsammelstücke mit schräg angeordneten Anschlussbereichen auszurüsten, so dass auch bei Altanlagen die eingangs beschriebenen Nachteile vermeidbar sind.

Vorteilhafterweise ist das Knickstellenelement entfembar an dem Milchsammelstück montierbar. Da damit keine dauerhafte Verbindung zwischen dem Milchsammelstück und dem Knickstellenelement erforderlich ist, kann das Knickstellenelement jederzeit ersetzt oder an anderen Milchsammelstücken verwendet werden. Außerdem ist es durch die entfembare Montage des Knickstellenelements möglich, die Lage des Knickstellenelements so zu ändern, dass eine rasche Montage bzw. Demontage der Milchschläuche möglich und/oder das Knickstellenelement bei einer Montage bzw. Demontage der Milchschläuche gänzlich entfembar ist.

Hinsichtlich der weiteren technischen Ausgestaltungen des Knickstellenelements gelten die bereits zuvor dargelegten .Kriterien, sowie die damit die damit verknüpften Vorteile.

Weitere erfindungsgemäße Ausführungsformen, sowie Vorteile und Aufgabe der Erfindung sind ferner in den Patentansprüchen definiert und gehen auch aus der folgenden detaillierten Beschreibung hervor. In den begleitenden Zeichnungen zeigen:
- Fig. 1: eine schematische Seitenansicht einer Ausführungsform eines erfindungsgemäßen Milchsammelstücks;
- Fig. 2: das Milchsammelstück aus Fig. 1 in zwei funktionalen Stellungen;
- Fig. 3: eine schematische Seitenansicht des Innenbereichs eines erfindungsgemäßen Milchsammelstücks, wobei das Knickstellenelement nicht eingezeichnet ist;
- Fig. 4: eine schematische Draufsicht auf das Milchsammelstück der Fig. 6.
- Fig. 5: eine schematische Ansicht eines Milchschlauchs, der vorzugsweise in Verbindung mit den in Fig. 6 und Fig. 7 gezeigten Milchsammelstück verwendbar ist;
- Fig. 6a, 6b und 6c: eine schematische Seitenansicht von Variationen einer weiteren erfindungsgemäßen Ausführungsform, wobei in Milchsammelstück mit schräg angebrachten Anschlussstutzen verwendet ist; und
- Fig. 7a und 7b: eine schematische Ansicht eines erfindungsgemäßen Knickstellenelements, das beispielsweise in Verbindung mit einem Milchsammelstück mit schrägen Anschlussbereichen verwendbar ist, wobei Fig. 7b das Kickstellenelement zusätzlich mit einer Klemmvorrichtung versehen zeigt.

Im weiteren werden detailliert Ausführungsbeispiele der vorliegenden Erfindung beschrieben.

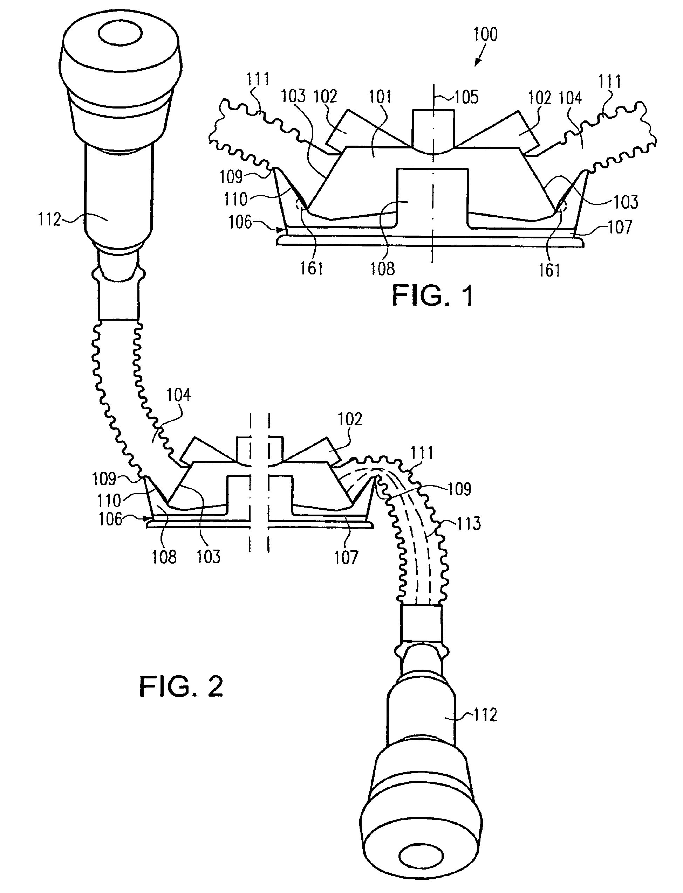

In Fig. 1 ist ein Milchsammelstück 100 schematisch dargestellt, wobei lediglich die für die Erfindung maßgeblichen Bereiche, d.h. der obere Teil des Milchsammelstücks dargestellt sind. Das Milchsammelstück 100 umfasst einen Behälterkörper 101 mit daran angebrachten Fluid- bzw. Luftzuleitungsstutzen 102 und Anschlussbereichen 103, an denen jeweils flexible Milchschläuche 104 angebracht sind. Ferner ist in der Figur eine Längsachse 105 gezeigt, deren Richtung ebenfalls mit der Betriebsstellung des Milchsammelstücks 100 zusammenfällt, wenn das Milchsammelstück bewegungslos, beispielsweise von den Milchschläuchen 104 gehalten, unter dem Euter eines zu melkenden Tieres hängt. Diese vertikale Richtung wird im Folgenden auch als Betriebsstellung bezeichnet. In der Beschreibung auftretende absolute Richtungsangaben beziehen sich dabei stets auf diese Betriebsstellung.

Am Milchsammelstück 100 ist ferner ein Knickstellenelement 106 vorgesehen, das einen Grundkörper 107, sowie mehrere Biegekantenhaltesegmente 108 umfasst. Jedes Biegekantenhaltesegment 108 weist eine Biegekante 109 und in der dargestellten Ausführungsform eine Schmiegefläche 110 auf. Optional kann in der Schmiegefläche 110 eine Aussparung 161 vorgesehen sein, um darin eine eventuell vorhandene Verdickung des Milchschlauchs 104 aufzunehmen. In der vorliegenden Ausführungsform sind der Grundkörper 107 und die Biegekantenhaltesegmente 108 aus einem einheitlichen Material, beispielsweise Kunststoff, Metall, etc. hergestellt, aber die Biegekantenhaltesegmente und der Grundkörper 107 können ebenfalls aus unterschiedlichen Materialien hergestellt sein. Insbesondere kann das Biegekantenhaltesegment 108 beispielsweise lediglich im wesentlichen aus einem Rahmen bestehen. Die Milchschläuche 104, die in der gezeigten Ausführungsform einen Bereich balgähnlicher Struktur 111 aufweisen, sind mit einem Endbereich so an den Anschlussbereichen 103 befestigt, dass die Milchschläuche 104 am Anschlussbereich 103 schräg zur Längsachse 105 verlaufen. Ein typischer Winkelbereich reicht von 10° bis 70°.

Mit Bezug zu Fig. 2 wird die Funktion des erfindungsgemäßen Milchsammelstücks beschrieben. In Fig. 2 sind zwei typische Betriebszustände des Milchsammelstücks 100 gezeigt, wobei ein Melkbecher 112 nach oben weist und typischerweise an einer Zitze eines Tieres befestigt ist, und wobei ein weiterer Melkbecher 112 nahezu senkrecht nach unten hängt. Diese Situation tritt beispielsweise beim Abnehmen und Anlegen des Melkgeschirrs auf, wobei der Reihe nach die einzelnen Melkbecher angelegt bzw. abgenommen werden, während die verbleibenden Melkbecher durch das Eigengewicht der Melkbecher nach unten hängen. In dieser Situation wird mittels der Biegekante 109 der Milchschlauch 104 in der Nähe der Biegekante 109 verformt, so die Innenseiten aufeinander haften oder zumindest sehr nahe beabstandet sind, wie dies durch die gestrichelte Linie 113 dargestellt ist. Selbst bei nicht ganz vollständiger Schließung des Innenraums des Milchschlauchs 104 findet durch das anstehende Melkvakuum ein vollständiges Zusammenziehen statt, so dass eine zuverlässige Aufrechterhaltung des Betriebsvakuums im Innenraum des Behälterelements 101 sichergestellt ist. Dabei wird vorteilhafterweise durch die Schmiegefläche 110 eine mechanische Verformung des Endbereichs des Milchschlauchs 104 im wesentlichen verhindert. Auf diese Weise erfolgt lediglich eine minimale Relativbewegung zwischen dem Anschlussbereich 103 und der Endbereich des Milchschlauchs 104, so dass die Materialermüdung des Milchschlauchs 104 in diesem Bereich vemachlässigbar klein ist. In der Stellung, in der der linke Melkbecher 112 dargestellt ist, ergibt sich durch das schräge Austreten des Milchschlauchs aus dem Anschlussbereich 103 eine Krümmung in dem Melkschlauch 104, die eine mechanisch dämpfende Wirkung verursacht, so dass die einzelnen Melkbecher 112 mechanisch stärker entkoppelt sind, als dies der Fall wäre, wenn senkrecht nach oben austretende Milchschläuche verwendet werden, wie dies eingangs beschrieben wurde. Ferner erlaubt der Bereich mit balgähnlicher Struktur 111 einen gewisse axiale Flexibilität, die ebenfalls für einen Ausgleich unerwünschter Relativbewegung zwischen den einzelnen Melkbechem und dem Milchsammelstück 100 führt.

In der in den Fig. 1 und 2 dargestellten Ausführungsform kann das Knickstellenelement 106 vorzugsweise so ausgeführt sein, dass die Knickstellenhaltesegmente 108 von einer ersten Position, die in den Fig. 1 und 2 dargestellt ist, wobei die Biegekante 109 so positioniert ist, dass ein definiertes Abknicken des Milchschlauchs 104 stattfindet, in eine zweite Position bewegbar ist, in der ein oder mehrere Knickstellenhaltesegmente 108 von dem Milchschlauch 104 so beabstandet sind, dass ein ungehinderter Zugang zu dem Anschlussbereich 103 möglich ist. In einer Ausführungsform ist das Knickstellenelement 106 um die Längsachse 105 drehbar ausgebildet, so dass alle Knickstellenhalteelemente 108 gleichzeitig aus der ersten Position in die zweite Position überführbar sind. Alternativ können die einzelnen Knickstellenhaltesegmente einen Mechanismus aufweisen, der es gestattet, diese einzeln von der ersten Position in die zweite Position zu bewegen. Beispielsweise kann jedes Knickstellenhaltesegment 108 einen Schnappmechanismus, einen Drehmechanismus oder ähnliches aufweisen, so dass jedes Knickstellenhaltesegment 108 beispielsweise durch Drehen oder durch Herunterklappen aus der ersten Position in die zweite Position bewegbar ist. Des weiteren können die Knickstellenhaltesegmente so ausgebildet sein, dass diese axial verschiebbar sind, so dass diese in diese von der ersten Position in die zweite Position überführbar sind.

In einer weiteren Ausführungsform kann der Grundkörper 107 des Knickstellenelements 106 teilweise oder gänzlich aus einem elastischen Material hergestellt sein, beispielsweise kann der Grundkörper 107 in Form eines dehnbaren Bandes, einer verformbaren Metallklammer, die das Milchsammelstück 100 teilweise umschließen kann, hergestellt sein, so dass sich beispielsweise die elastische Metallklammer durch leichtes Auseinanderbiegen leicht öffnen lässt, wodurch die an der Klammer angebrachten Biegekantenhaltesegmente 108 in der Position verändert werden können. Bei dem Ausführungsbeispiel, in dem der Grundkörper 107 aus einem elastischen Band besteht, können die Biegekantenhaltesegmente 108 einfach durch Dehnen und Verdrehen des Haltebandes nach unten geklappt werden, so dass ein freier Zugang zu den Anschlussbereichen 103 möglich ist.

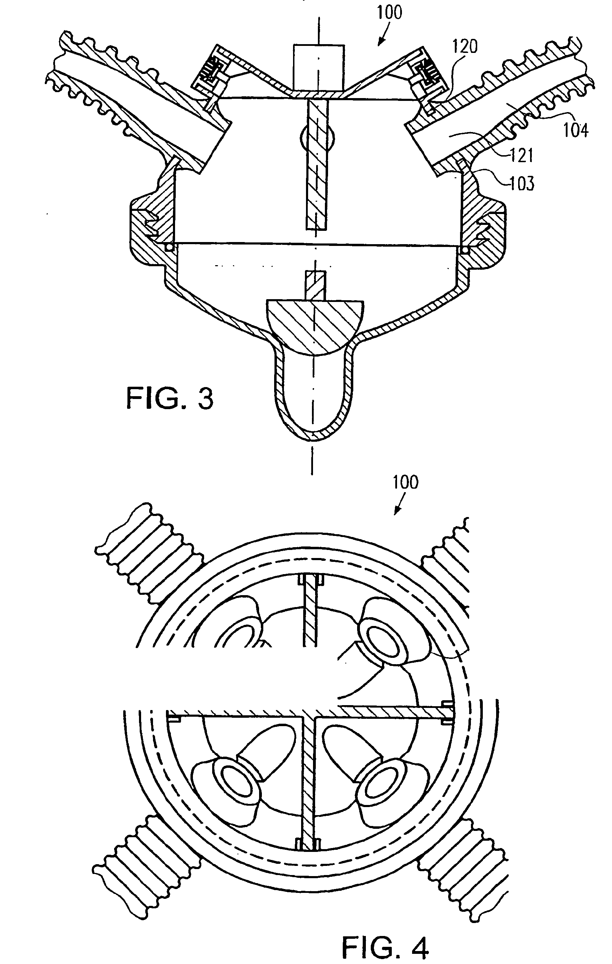

In den Fig. 3, 4 und 5 sind weitere Details der in den Fig. 1 und 2 dargestellten Ausführungsformen gezeigt.

In Fig. 3 ist eine schematische Seiteninnenansicht des Milchsammelstücks 100 gezeigt. Der Anschlussbereich 103 weist eine Fläche 120 auf, wobei die Flächennormale mit der Längsachse 105 einen Winkel einschießt, der vorteilhafterweise im Bereich von 10° bis 90° liegt. In der dargestellten Ausführungsform liegt dieser Winkel vorzugsweise bei 30° bis 60°. Anzumerken ist, dass bei dem Winkel stets der kleinere Winkel zwischen der Längsachse 105 und dem Anschlussbereich 103 gemeint ist, so dass der Milchschlauch 104 in Betriebsstellung mit einer nach oben gerichteten Neigung aus dem Milchsammelstück 100 austritt. Die Fläche 120 weist eine Öffnung 121 auf, in die der Endbereich des Milchschlauchs eingeführt ist.

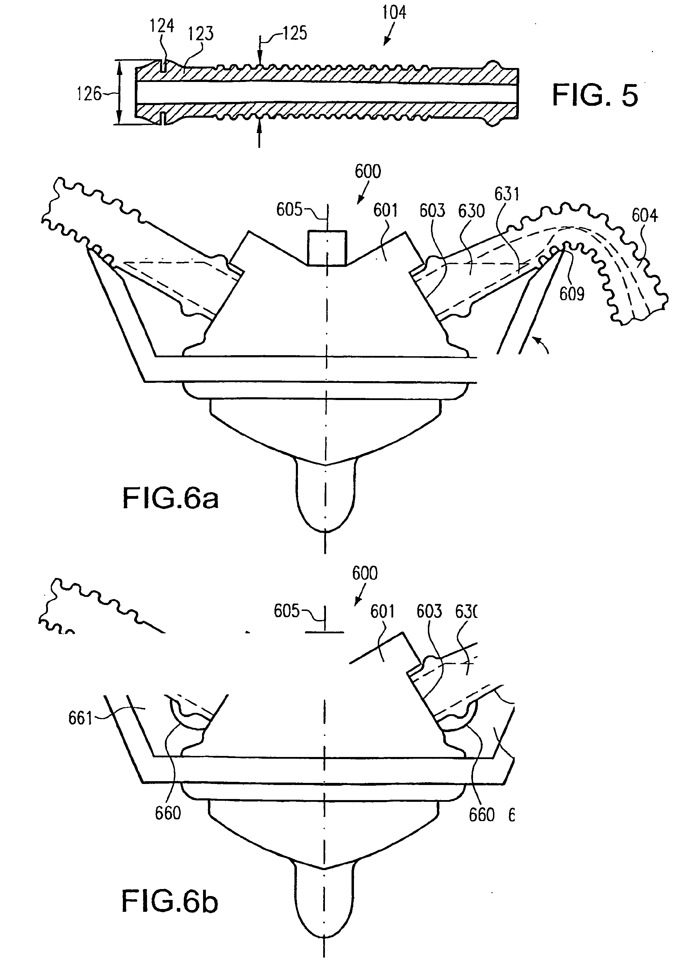

Fig. 5 zeigt schematisch eine bevorzugte Ausführungsform des Milchschlauchs 104, wobei an einem Endbereich 123 ein Einschnitt 124 vorgesehen ist. Ferner ist der Außendurchmesser 126 des Endbereichs 123 im Bereich des Einschnitts 124 größer als ein Außendurchmesser 125 im mittleren Bereich des Milchschlauchs 104.

Fig. 3 zeigt ferner, dass der Rand der Öffnung 120 mit dem Einschnitt 124 im Eingriff ist, so dass der Milchschlauch 104 zuverlässig in Position gehalten wird bei Auftreten von beim Melkvorgang typischen axialen Kräften auf den Milchschlauch 104. Andererseits kann der Milchschlauch 104 bei Bedarf einfach und schnell entfernt werden.

Fig. 4 zeigte eine Draufsicht auf das Milchsammelstück 100, wobei der Bereich mit dem vergrößerten Außendurchmesser 126 deutlich erkennbar ist.

Während des Betriebs findet dabei im Bereich der Fläche 120 sowie der Öffnung 121 aufgrund des Knickstellenelements 106 mit der entsprechenden Schmiegefläche 110 (vergleiche Fig. 1 und 2) kaum eine Relativbewegung zwischen dem Milchsammelstück 100 und dem Milchschlauch 104 statt, so dass eine lange Lebensdauer des Milchschlauchs 104, insbesondere, wenn der Bereich am Einschnitt 124 den vergrößerten Außendurchmesser 126 aufweist, erreicht wird. Ferner entstehen durch die fehlende bzw. geringe Verformung des Milchschlauchs 104 im Bereich der Fläche 120 kaum Orte, an denen sich Milch über längere Zeit hinweg ablagern und damit krankheitsbildende Keime erzeugen kann, da sich der Milchschlauch 104 nicht vom Milchsammelstück ablösen kann. Dadurch wird die Einhaltung der erforderliche Hygienestandards deutlich erleichtert.

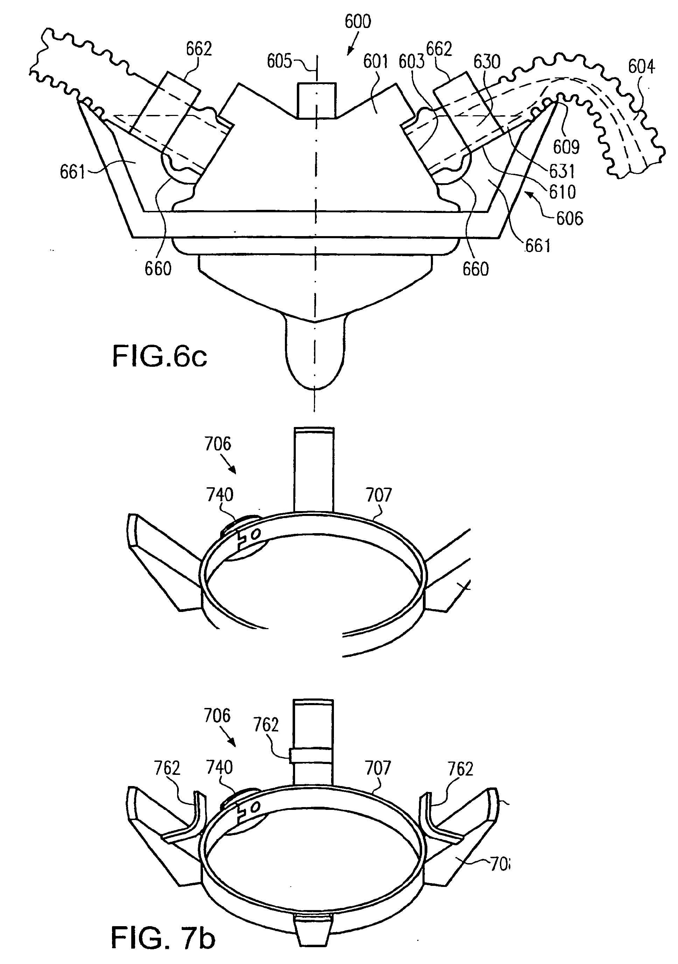

Fig. 6a, 6b und 6c zeigen schematisch weitere Ausführungsbeispiele eines erfindungsgemäßen Milchsammelstücks.

In Fig. 6a bis 6c sind Teile, die zu jenen in den Fig. 1 bis 5 dargestellten Teilen ähnlich oder identisch sind, mit gleichen Bezugszeichen jedoch mit einer führenden "6" anstelle der führenden "1" gekennzeichnet. Die Beschreibung der gleichen bzw. ähnlichen Teile wird daher weggelassen.

In Fig. 6a weist das Milchsammelstück 600 im Anschlussbereich 603 einen Anschlussstutzen 630, der in Bezug zur Längsachse 605 schräg angeordnet ist. Das Knickstellenelement 606 ist dabei so positioniert, dass die Biegekante 609 in der Richtung, in der sich der Anschlussstutzen 630 erstreckt, vom Rand des Anschlussstutzens 630 beabstandet ist, so dass der Milchschlauch 604 an der Biegekante 609 abgeknickt wird, ohne dass sich der Milchschlauch 604 von einem unteren Bereich 631 des Anschlussstutzens 630 ablöst bzw. anhebt, wie dies bei einem herkömmlichen Milchsammelstück der Fall ist. Vorzugsweise liegt der Abstand zwischen dem Anschlussstutzen 630 und der Biegekante 609 bei 1 mm bis 15 mm.

Vorzugsweise ist das Knickstellenelement 606 so ausgebildet, dass dieses entfembar an dem Milchsammelstück 600 angebracht ist. Insbesondere ist es vorteilhaft, dass sämtliche bauliche Maßnahmen zur Befestigung des Knickstellenelements 606 an dem Knickstellenelement vorgesehen sind, so dass keine strukturellen Maßnahmen am Milchsammelstück 600 zur Befestigung vorzusehen sind. Dadurch kann das Knickstellenelement 606 auch mit herkömmlichen Milchsammelstücken verwendet werden. Selbstverständlich kann in dieser Ausführungsform sowie auch in allen anderen bisher erwähnten Ausführungsformen das Knickstellenelement 606 bzw. 106 dauerhaft mit einem Teil des Milchsammelstücks 600 verbunden sein, oder ein integraler Bestandteil des Milchsammelstücks 600 sein. Hinsichtlich der Ausbildung des Knickstellenelements 606 gelten die gleichen Kriterien, wie sie bereits in Zusammenhang mit den Fig. 1 bis 5 erwähnt wurden. Bei dem Knickstellenelement 606 kann auf eine Schmiegefläche verzichtet werden, da die mechanische Stabilität des Endbereichs des Milchschlauchs 604 durch den Anschlussstutzen 630 gewährleistet ist.

Fig. 6b zeigt eine Variation der in Fig. 6a dargestellten Ausführungsform, wobei ein Haltebereich 661 vorgesehen ist, der eine Schmiegefläche 610 bildet, an der der Milchschlauch 604 anliegt. Des weiteren kann eine Aussparung 660 vorgesehen werden, um eine Verdickung des Milchschlauchs 604 aufzunehmen. Durch die Schmiegefläche 610 wird eine Spaltbildung im Bereich 631 beim Bewegen des Milchschlauchs 604 zuverlässig verhindert, so dass sich dort im wesentlichen keine Milchreste absetzen können.

Fig. 6c zeigt eine weitere Variante der in Fig. 6a und 6b dargestellten Ausführungsform, wobei eine Klemmvorrichtung 662 im hinteren Bereich des Anschlussstutzens vorgesehen ist. Die Klemmvorrichtung 662 kann als ein ringförmiges Element ausgebildet sein, das den Milchschlauch 604 und damit den Anschlussstutzen 630 teilweise oder vollständig umschließt. Des weiteren kann die Klemmvorrichtung 662 als ein Halteelement mit einem Bügel oder einer bügel-artigen Struktur ausgebildet sein, so dass zumindest der Milchschlauch 604 an einer Stelle an der der Biegekante 609 gegenüberliegenden Seite auf den Anschlussstutzen 630 gedrückt wird. Die Klemmvorrichtung 662 kann an dem Sammelstück 600 oder an dem Knickstellenelement 606 befestigt sein. Die Klemmvorrichtung 662 kann einen entsprechenden Verschlussmechanismus aufweisen, so dass die Klemmvorrichtung in der Betriebsstellung arretiert werden kann.

Fig. 7a zeigt schematisch ein erfindungsgemäßes Knickstellenelement 706, das einen Grundkörper 707 sowie Biegekantenhaltesegmente 708 mit einer entsprechenden Biegekante 709 aufweist. Ferner ist ein Verschlusselement 740 vorgesehen: In diesem Ausführungsbeispiel ist der Grundkörper 707 aus einem zumindest teilweise elastischen Material hergestellt, so dass durch Betätigen bzw. Öffnung des Verschlusselements 740 der ringförmige Grundkörper 707 geöffnet, d.h. auseinandergedrückt werden kann. Vorteilhafterweise ist die Elastizität des Grundkörpers 707 so ausgeprägt, dass das Knickstellenelement 706 von unten oder oben (wenn sämtliche Anschlussschläuche an dem Milchsammelstück entfernt sind) aufschiebbar oder, wenn sich der Grundkörper 707 weit genug öffnen lässt, von der Seite her anbringbar ist. Durch das Verschlusselement 740 ist das Knickstellenelement 706 einerseits an einem Milchsammelstück zuverlässig montierbar, und andererseits können die Biegekanten 709 durch Öffnen des Verschlusselements 740 und Drehen des Grundkörpers 707 von einer ersten Position in eine zweite Position bewegt werden. Das Knickstellenelement 706 kann in einer weiteren Ausführungsform ein Scharnierelement aufweisen, so dass zwei oder mehr Bereiche an dem Grundkörper 707 entstehen, die relativ zueinander bewegbar sind. Eine besonders einfache Ausführungsform ergibt sich, wenn der Grundkörper im wesentlichen aus einem elastischen Band besteht, an dem die Biegekantenhaltesegmente 708 befestigt sind.

Dabei können die Biegekantenhaltesegmente 708 so ausgebildet sein, dass diese nach dem Befestigen bzw. Anlegen des Grundkörpers 707 an ein Milchsammelstück an dem Grundkörper 707 zu befestigen sind. Dazu können die Biegekantenhaltesegmente 708 einen geeigneten Befestigungsmechanismus, beispielsweise einen Einschnitt, einen Clipverschluss, einen Druckknopfkontakt mit einer entsprechenden Gegenstelle an dem Grundkörper 707, etc. aufweisen. Durch die Elastizität des Grundkörpers 707 kann dann jedes einzelne Biegekantenhaltesegment 708 durch Verdrehen, d.h. durch eine Torsionsbewegung des Grundkörpers 707, von einer ersten Position in einer zweite Position bewegt werden. Beispielsweise kann ein Biegekantenhaltesegment 708 einfach von dem Milchsammelstück etwas weggezogen und anschließend nach unten geklappt werden. Wenn entsprechende Befestigungsmittel vorgesehen sind, können die Biegekantenhalteelement 708 schnell und einfach demontiert werden, so dass entsprechende Anschlussbereiche des Milchsammelstücks für eine Montage oder Demontage der Milchschläuche zugänglich sind. Des weiteren kann ein Arretierungsmittel vorgesehen sein, beispielsweise in Form eines Rings oder eines Bandes, etc., der bzw. das um alle Biegekantenhaltesegmente 708 gelegt wird, so dass eine ausreichende mechanische Stabilität in der ersten Position gewährleistet ist. Je nach Art des Milchsammelstücks, mit dem das Knickstellenelement 706 zu verwenden ist, können die Biegekantenhaltesegments 708 eine Schmiegefläche aufweisen. Wie bereits in Zusammenhang mit den Fig. 1 und 2 erläutert wurde, ist eine Schmiegefläche für ein Milchsammelstück mit schräger Austrittsfläche ohne Anschlussstutzen vorteilhaft, da damit eine hohe Stabilität des Milchschlauch im Anschlussbereich erreicht wird. Vorteilhafterweise kann die Schmiegefläche teilweise dem Radius des Milchschlauchs nachgebildet sein, so dass sich durch die Schmiegefläche eine gewisse Führung des Milchschlauchs ergibt. Selbstverständlich kann der Grundkörper gänzlich oder teilweise aus unelastischen Materialien hergestellt sein. Beispielsweise kann der Grundkörper 707 ein beliebiges Rahmenelement sein, dessen innerer Bereich der Form des Milchsammelstücks angepasst ist.

Fig. 7b zeigt das Knickstellenelement aus Fig. 7a mit einer zusätzlichen Klemmvorrichtung 762, die in diesem Beispiel als Bügel ausgebildet sind, die an den Biegekantenhalteelementen 708 befestigt sind. Dieser besonders einfache Aufbau ermöglicht es, dass die Klemmvorrichtung 762 durch Positionieren, beispielsweise durch Drehen, des Knickstellenelements ebenso in die Betriebsstellung gebracht wird. Jedoch gelten für diese Ausführungsform die gleichen Kriterien hinsichtlich der Klemmvorrichtung 762 wie für die Klemmvorrichtung 662 aus Fig. 6c. Das heißt, die Klemmvorrichtung kann z.B. als ringförmiges Element mit entsprechendem Verschluss, etc. ausgebildet sein.

Durch die Klemmvorrichtungen 662 und 762 wird während des Betriebs weitestgehend sichergestellt, dass eine Spaltbildung zwischen einem Anschlussstutzen und dem Milchschlauch sowohl in der in Fig. 2 dargestellten Position (Position während des Abnehmens des Melkgeschirrs)des rechten Melkbechers 112 sowie in der Position (Position während des Melkens) des linken Melkbechers 112. Damit lässt sich eine Ansammlung von Milchresten im Bereich zwischen dem Milchschlauch und dem Anschlussstutzen deutlich reduzieren oder gar gänzlich vermeiden, wodurch sich ein höherer Hygienestandard erreichen lässt.

Ferner sollte erwähnt werden, dass die in den Figuren dargestellten Knickstellenelemente für die Verwendung mit im wesentlichen einen runden Querschnitt aufweisenden Milchsammelstücken gezeigt sind. Die äußere Form der Milchsammelstücke spielt jedoch für die vorliegende Erfindung keine Rolle, und die Gestalt des Knickstellenelements ist in einfacher Weise an beliebige äußere Formen des Milchsammelstücks anpassbar. Ferner gelten die Anmerkungen, die in Zusammenhang mit den Knickstellenelementen 106 und 606 mit Bezug zu den Fig. 1 bis 6 gemacht werden, in analoger Weise für das Knickstellenelement 706. Insbesondere ist die Wahl der Materialien und der äußeren Form, sowie die genaue Form der Biegekantenhaltesegmente als nicht durch die detaillierte Beschreibung beschränkend zu betrachten. Ferner kann jedes geeignete Befestigungsmittel zur Anbringung des Knickstellenelements an dem Milchsammelstück verwendet werden.

## Patentansprüche

1. Milchsammelstück (100; 600) für eine automatische Melkanlage mit mehreren Anschlussbereichen (103; 603) für flexible Milchschläuche (104; 604) und mit einer Längsachse (105, 605), wobei erste Endbereiche der Milchschläuche (104; 604) an dem Milchsammelstück (100; 600) schräg zur Längsachse (105; 605) befestigbar sind, und wobei ferner ein Knickstellenelement (106; 606) mit einer vom Anschlussbereich (103; 603) beabstandeten Biegekante (109; 609) vorgesehen ist, die einen Biegebereich im Milchschlauch (104; 604) definiert, **dadurch gekennzeichnet, dass**
jede Biegekante (109; 609) von einer ersten Position, in der die Biegekante (109; 609) positioniert ist, den Milchschlauch (104; 604) abzuknicken, in eine zweite Position bewegbar ist, in der die Biegekante (109; 609) von dem Milchschlauch (104; 604) einen Abstand hat, so dass der Anschlussbereich (103; 603) für eine Montage bzw. Demontage des Milchschlauchs (104; 604) zugänglich ist.

2. Das Milchsammeistück nach Anspruch 1, **dadurch gekennzeichnet, dass** die ersten Endbereiche der Milchschläuche im befestigten Zustand einen Winkel von 10° oder mehr mit der Längsachse einschließen, wenn diese in einer Richtung ausgerichtet ist, die durch die Betriebstellung des Milchsammelstücks definiert ist.

3. Das Milchsammelstück nach Anspruch 1, **dadurch gekennzeichnet, dass** das Knickstettenelement bewegbar ist, so dass einige oder alle der mehreren Biegekanten gleichzeitig von der ersten Position in die zweite Position bewegbar sind.

4. Das Milchsammelstück nach Anspruch 3, **dadurch gekennzeichnet, dass** das Knickstellenelement drehbar an dem Milchsammeistück befestigt ist.

5. Das Milchsammelstück nach einem der Ansprüche 1 bis 4, **dadurch gekennzeichnet, dass** das Knickstellenelement entfernbar an dem Milchsammelstück befestigt ist.

6. Das Milchsammelstück nach Anspruch 1, **dadurch gekennzeichnet, dass** das Knickstellenelement von der ersten Position in die zweite Position vertikal, in Bezug zur Betriebsstellung, verschiebbar ist.

7. Das Milchsammelstück nach einem der Ansprüche 1 bis 6, **dadurch gekennzeichnet, dass** das Kickstellenelement mehrere Biegekantenhaltesegmente aufweist.

8. Das Milchsammelstück nach Anspruch 7, **dadurch gekennzeichnet, dass** jedes Biegekantenhaltesegment bewegbar an dem Knickstellenelement angebracht ist.

9. Das Milchsammelstück nach Anspruch 8, **dadurch gekennzeichnet, dass** jedes Biegekantenhaltesegment einen Dreh- und/oder Klappmechanismus aufweist oder verschiebbar ausgebildet ist, so dass jedes Biegekantenhaltesegment von der ersten Position in die zweite Position bewegbar ist.

10. Das Milchsammelstück nach einem der Ansprüche 7 bis 9, **dadurch gekennzeichnet, dass** das Knickstellehelement ein Arretierungsmittel (740) umfasst, mit dem jedes Biegekantenhaltesegment in der ersten Position arretierbar ist.

11. Das Milchsammelstück nach Anspruch 10, **dadurch gekennzeichnet, dass** das Arretierungsmittel ausgebildet ist, gleichzeitig alle Biegekantenhaltesegmente in der ersten Position zu arretieren.

12. Das Milchsammelstück nach einem der Ansprüche 1 bis 11, **dadurch gekennzeichnet, dass** das Knickstellenelement einen verformbaren Bereich umfasst, so dass das Knickstellenelement durch Verformung des verformbaren Bereichs entfembar an dem Milchsammelstück befestigbar und/oder in der ersten Position arretierbar ist.

13. Das Milchsammelstück nach Anspruch 12, **dadurch gekennzeichnet, dass** der verformbare Bereich ein elastisches Material umfasst.

14. Das Milchsammelstück nach einem der vorhergehenden Ansprüche, **dadurch gekennzeichnet, dass** das Knickstellenelement zumindest zwei Teilbereiche umfasst, die gegeneinander bewegbar sind.

15. Das Milchsammelstück nach Anspruch 14, **dadurch gekennzeichnet, dass** die zumindest zwei Teilbereiche durch ein Verschlusselement verbindbar sind.

16. Das Milchsammelstück nach Anspruch 14, **dadurch gekennzeichnet, dass** die zumindest zwei Teilbereiche relativ zu einander mittels eines die beiden Teilbereiche verbindenden verformbaren Bereichs bewegbar sind.

17. Das Milchsammelstück nach Anspruch 16, **dadurch gekennzeichnet, dass** der verformbare Bereich ein elastisches Material und/oder ein Scharnierelement und/oder einen Klappmechanismus aufweist.

18. Das Milchsammeistück nach einem der Ansprüche 1 bis 17, **dadurch gekennzeichnet, dass** das Knickstellenelement einen elastischen Grundkörper und daran befestigte Biegekantensegmente aufweist.

19. Das Milchsammetstück nach Anspruch 18, **dadurch gekennzeichnet, dass** der elastische Grundkörper so ausgebildet ist, dass eine Längenänderung und/oder Formänderung und/oder eine Torsionsbewegung im elastischen Grundkörper möglich ist.

20. Das Milchsammelstück nach einem der Ansprüche 1 bis 19, **dadurch gekennzeichnet, dass** das Milchsammelstück einen Anschtussstutzen in jedem Anschlussbereich aufweist, wobei die Biegekante vor dem Anschlussstutzen so positioniert ist, dass bei einer mit Bezug zur Längsachse und der Betriebstellung nach unten gerichteten Kraft auf den Milchschlauch dieser entlang der Biegekante abknickt, ohne sich vom Anschlussstutzen abzulösen.

21. Das Milchsammeistück nach Anspruch 20, **dadurch gekennzeichnet, dass** die Biegekante zum Anschlussstutzen und in axialer Richtung einen Abstand von etwa 1 mm bis 15 mm aufweist.

22. Das Milchsammelstück nach einem der Ansprüche 1 bis 19, **dadurch gekennzeichnet, dass** jeder Anschtussbereich eine Fläche mit einer Öffnung zur Aufnahme des Milchschlauchs aufweist.

23. Das Milchsammelstück nach Anspruch 22, **dadurch gekennzeichnet, dass** das Milchsammelstück einen Milchschlauch (104) umfasst, und der Milchschlauch (104) an dem in die Öffnung einzuführenden ersten Endbereich (123) einen Einschnitt (124) zumindest teilweise um den Umfang des Milchschlauches herum aufweist.

24. Das Milchsammelstück nach Anspruch 23, **dadurch gekennzeichnet, dass** der Außendurchmesser (126) des Milchschlauches an dem in die Öffnung einzuführenden ersten Endbereich (123) zumindest im Bereich des Einschnitts (124) größer als im mittleren Bereich (125) des Milchschlauchs ist.

25. Das Milchsammelstück nach einem der Ansprüche 1 bis 24, **dadurch gekennzeichnet, dass** das Knickstetlenelement eine dem Milchschlauch zugewandte Schmiegefläche (110; 610) aufweist.

26. Das Milchsammelstück nach einem der Ansprüche 23 bis 25, **dadurch gekennzeichnet, dass** der Milchschlauch eine Balg-ähnliche Struktur aufweist.

27. Das Milchsammelstück nach Anspruch 26, **dadurch gekennzeichnet, dass** der Milchschlauch zwischen dem in die Öffnung eingeführten Endbereich und der Balg-ähnlichen Struktur einen unstrukturierten Bereich aufweist, so dass bei einer auftretenden Biegebelastung die Krümmung des Milchschlauches im Wesentlichen ab der Balg-ähnlichen Struktur auftritt.

28. Das Milchsammelstück nach Anspruch 37, **dadurch gekennzeichnet, dass** die Biegekante so positioniert ist, dass bei einer hinsichtlich der Betriebstellung nach unten gerichteten auf den Milchschlauch wirkenden Kraft die Biegekante am Übergang vom strukturierten Bereich zum Balg-ähnlichen Bereich oder im Balg-ähnlichen Bereich mit dem Milchschlauch in Berührung ist.

29. Das Milchsammelstück nach einem der Ansprüche 1 bis 28, **dadurch gekennzeichnet, dass** eine Klemmvorrichtung (662) vorgesehen ist, um den Milchschlauch im befestigten Zustand in Strömungsrichtung hinter der Biegekante zumindest auf der der Biegekante gegenüber liegenden Seite festzuklemmen.

30. Das Milchsammelstück nach Anspruch 29, **dadurch gekennzeichnet, dass** das Milchsammelstück einen Anschlussstutzen (630) im Anschlussbereich (603) aufweist und die Klemmvorrichtung (662) ausgebildet ist, eine Spaltbildung zwischen dem Anschlussstutzen (630) und dem Milchschlauch (604) im befestigten Zustand während des Betriebs im wesentlichen zu vermeiden.

31. Das Milchsammelstück nach Anspruch 29, **dadurch gekennzeichnet, dass** die Klemmvorrichtung (662) an dem Knickstellenelement (606) befestigt und ausgebildet ist, den Milchschlauch im befestigten Zustand zumindest teilweise zu umschließen.

32. KnicksteHenetement (106; 608; 706) zur Verwendung mit einem Milchsammelstück (100; 600) mit schräg angeordnetem Anschlussbereich (103; 603), wobei das Knickstellenelement (106; 606; 706) ein Knickstellensegment (708) mit einer Biegekante (109; 609; 709) aufweist und ausgebildet ist, um an dem Milchsammelstück so montierbar zu sein, dass das Knickstetlenelement (106; 606; 706) in montiertem Zustand von einer ersten Position, in der die Biegekante (109; 609; 709) positioniert ist, den Milchschlauch (104; 604) abzuknicken, in eine zweite Position bewegbar ist, in der die Biegekante (109; 609; 709) von dem Milchschlauch (104; 604) derart beabstandet, dass der Anschtussbereich (103; 603) für eine Montage bzw. Demontage des Milchschlauchs (104; 604) zugänglich ist.

33. Das Knickstellenelement nach Anspruch 32, **dadurch gekennzeichnet, dass** das Knickstellenelement entfernbar an dem Milchsarnrnelstück montierbar ist.

34. Das Knicksteltenelement nach Anspruch 32 oder 33, **dadurch gekennzeichnet, dass** das Knickstellenelement einen Grundkörper (707) aufweist, an dem das Knickstellensegment befestigt ist.

35. Das Knickstellenelement nach Anspruch 34, **dadurch gekennzeichnet, dass** das Knickstellensegment bewegbar an dem Grundkörper befestigt ist.

36. Das Knickstellenelement nach einem der Ansprüche 32 bis 35, **dadurch gekennzeichnet, dass** mehrere Knickstellensegmente an dem Grundkörper vorgesehen sind.

37. Das Knickstellenelement nach einem der Ansprüche 32 bis 36, **dadurch gekennzeichnet, dass** das Knickstellensegment von einer ersten Position in eine zweite Position bewegbar.

38. Das Knickstellenelement nach Anspruch 37, **dadurch gekennzeichnet, dass** das Knickstellensegment mittels eines Dreh- und/oder Klappmechanismus und/oder durch Eigenelastizität des Grundkörpers und/oder durch Verschieben von der ersten Position in die zweite Position bewegbar ist.

39. Das Knickstellenelement nach einem der Ansprüche 32 bis 38, **dadurch gekennzeichnet, dass** der Grundkörper einen Verschlussmechanismus zur Befestigung des Grundkörpers an dem Milchsammelstück.

40. Das Knickstellenelement nach Anspruch 39, **dadurch gekennzeichnet, dass** der Grundkörper einen elastischen Bereich und/oder ein Schamierelement umfasst.

41. Das Knickstellenelement nach einem der Ansprüche 32 bis 40, **dadurch gekennzeichnet, dass** mehrere Knicksteilensegmente vorgesehen sind und der Grundkörper elastisch ist, so dass diese durch die Eigenelastizität an dem Milchsammelstück befestigbar ist.

42. Das Knickstellenelement nach einem der Ansprüche 32 bis 41, **dadurch gekennzeichnet, dass** der Grundkörper einen ringsegmentförmigen Teil oder einen ringförmigen Bereich aufweist.

43. Das Kickstellenelement nach einem der Ansprüche 32 bis 42, **dadurch gekennzeichnet, dass** eine Klemmvorrichtung (762) vorgesehen ist, um einen Milchschlauch an einer der Biegekanten gegenüberliegenden Seite festzuklemmen.

## Claims

1. A milk collecting piece (100; 600) for an automatic milking system, comprising a plurality of connection portions (103; 603) for flexible milk tubes (104; 604) and a longitudinal axis (105; 605), wherein first end portions of the milk tubes (104; 604) can be fastened to the milk collecting piece (100; 600) in a direction oblique to the longitudinal axis (105; 605), and wherein a kink element (106; 606) is further provided with a bending edge (109; 609) spaced apart from the connection portion (103; 603), said bending edge defining a bending portion in the milk tube (104; 604),
**characterized in that**
each bending edge (109; 609) is movable from a first position in which the bending edge (109; 609) is positioned to kink the milk tube (104; 604), into a second position in which the bending edge (109; 609) is spaced apart from the milk tube (104; 604) such that the connection portion (103; 603) is accessible for assembling or disassembling the milk tube (104; 604).

2. The milk collecting piece according to claim 1, **characterized in that** the first end portions of the milk tubes in the fastened state enclose an angle of 10° or more with the longitudinal axis if said axis is oriented in a direction defined by the operative position of the milk collecting piece.

3. The milk collecting piece according to claim 1, **characterized in that** the kink element is movable so that some or all of the plurality of bending edges are simultaneously movable from the first position into the second position.

4. The milk collecting piece according to claim 3, **characterized in that** the kink element is rotatably fastened to the milk collecting piece.

5. The milk collecting piece according to any one of claims 1 to 4, **characterized in that** the kink element is removably fastened to the milk collecting piece.

6. The milk collecting piece according to claim 1, **characterized in that** the kink element is displaceable from the first position into the second position in vertical direction with respect to the operative position.

7. The milk collecting piece according to any one of claims 1 to 6, **characterized in that** the kink element comprises a plurality of bending-edge holding segments.

8. The milk collecting piece according to claim 7, **characterized in that** each bending-edge holding segment is movably mounted on the kink element.

9. The milk collecting piece according to claim 8, **characterized in that** each bending-edge holding segment comprises a rotating and/or folding mechanism or is configured to be displaceable so that each bending-edge holding segment is movable from the first position into the second position.

10. The milk collecting piece according to any one of claims 7 to 9, **characterized in that** the kink element comprises a locking means (740) with which each bending-edge holding segment can be locked in the first position.

11. The milk collecting piece according to claim 10, **characterized in that** the locking means is configured to lock all of the bending-edge holding segments in the first position at the same time.

12. The milk collecting piece according to any one of claims 1 to 11, **characterized in that** the kink element comprises a deformable area so that the kink element can be removably fastened to the milk collecting piece by deformation of the deformable portion and/or can be locked in the first position.

13. The milk collecting piece according to claim 12, **characterized in that** the deformable portion comprises an elastic material.

14. The milk collecting piece according to any one of the preceding claims, **characterized in that** the kink element comprises at least two sub-portions that are movable relative to one another.

15. The milk collecting piece according to claim 14, **characterized in that** the at least two sub-portions can be connected by a closing element.

16. The milk collecting piece according to claim 14, **characterized in that** the at least two sub-portions are movable relative to one another by means of a deformable portion connecting the two sub-portions.

17. The milk collecting piece according to claim 16, **characterized in that** the deformable portion comprises an elastic material and/or a hinge element and/or a folding mechanism.

18. The milk collecting piece according to any one of claims 1 to 17, **characterized in that** the kink element comprises an elastic basic body and bending-edge segments fastened thereto.

19. The milk collecting piece according to claim 18, **characterized in that** the elastic basic body is configured such that a change in length and/or shape and/or a torsional movement is possible in the elastic basic body.

20. The milk collecting piece according to any one of claims 1 to 19, **characterized in that** the milk collecting piece comprises a connection element in each connection portion, the bending edge being positioned in front of the connection element such that upon a force exerted on the milk tube, which is directed downwards relative to the longitudinal axis and the operative position, said milk tube is kinked along the bending edge without detaching from the connection element.

21. The milk collecting piece according to claim 20, **characterized in that** the bending edge has a distance of about 1 mm to 15 mm relative to the connection element and in axial direction.

22. The milk collecting piece according to any one of claims 1 to 19, **characterized in that** each connection portion has a surface with an opening for receiving the milk tube.

23. The milk collecting piece according to claim 22, **characterized in that** the milk collecting piece comprises a milk tube (104), and the milk tube (104) has an incision (124) at least in part around the circumference of the milk tube on the first end portion (123) to be introduced into the opening.

24. The milk collecting piece according to claim 23, **characterized in that** the outer diameter (126) of the milk tube on the first end portion (123) to be introduced into the opening is greater at least in the area of the incision (124) than in the central area (125) of the milk tube.

25. The milk collecting piece according to any one of claims 1 to 24, **characterized in that** the kink element comprises a support surface (110; 610) facing the milk tube.

26. The milk collecting piece according to any one of claims 23 to 25, **characterized in that** the milk tube has a bellows-like structure.

27. The milk collecting piece according to claim 26, **characterized in that** the milk tube has an unstructured portion between the end portion introduced into the opening and the bellows-like structure so that upon occurrence of a bending load the curvature of the milk tube is observed essentially from the bellows-like structure onwards.

28. The milk collecting piece according to claim 27, **characterized in that** the bending edge is positioned such that upon a force directed downwards with respect to the operative position and acting on the milk tube, the bending edge is in contact with the milk tube at the transition from the structured portion to the bellows-like portion or in the bellows-like portion.

29. The milk collecting piece according to any one of claims 1 to 28, **characterized in that** a clamping device (662) is provided for fixedly clamping the milk tube in the fastened state in flow direction behind the bending edge at least at the side opposite to the bending edge.

30. The milk collecting piece according to claim 29, **characterized in that** the milk collecting piece comprises a connection element (630) in the connection portion (603) and the clamping device (662) is configured to essentially prevent the formation of a gap between the connection element (630) and the milk tube (604) in the fastened state during operation.

31. The milk collecting piece according to claim 29, **characterized in that** the clamping device (662) is fastened to the kink element (606) and configured to enclose the milk tube in the fastened state at least in part.

32. A kink element (106; 606; 706) for use with a milk collecting piece (100; 600) with obliquely arranged connection portion (103; 603), the kink element (106, 606; 706) comprising a kink segment (708) with a bending edge (109; 609; 709) and being configured such that it is mountable on the milk collecting piece, that the kink element (106; 606; 706) in the mounted state is movable from a first position in which the bending edge (109; 609; 709) is positioned to kink the milk tube (104; 604), into a second position in which the bending edge (109; 609; 709) is spaced apart from the milk tube (104; 604) such that the connection portion (103; 603) is accessible for assembling or disassembling the milk tube (104; 604).

33. The kink element according to claim 32, **characterized in that** the kink element is removably mountable on the milk collecting piece.

34. The kink element according to claim 32 or 33, **characterized in that** the kink element comprises a basic body (707) which has the kink segment fastened thereto.

35. The kink element according to claim 34, **characterized in that** the kink segment is movably fastened to the basic body.

36. The kink element according to any one of claims 32 to 35, **characterized in that** a plurality of kink segments are provided on the basic body.

37. The kink element according to any one of claims 32 to 36, **characterized in that** the kink segment is movable from a first position into a second position.

38. The kink element according to claim 37, **characterized in that** the kink segment is movable by means of a rotating and/or folding mechanism and/or by the inherent elasticity of the basic body and/or by displacement from the first position into the second position.

39. The kink element according to any one of claims 32 to 38, **characterized in that** the basic body comprises a closing mechanism for fastening the basic body to the milk collecting piece.

40. The kink element according to claim 39, **characterized in that** the basic body comprises an elastic portion and/or a hinge element.

41. The kink element according to any one of claims 32 to 40, **characterized in that** a plurality of kink segments are provided and the basic body is so elastic that said segments can be fastened by inherent elasticity to the milk collecting piece.

42. The kink element according to any one of claims 32 to 41, **characterized in that** the basic body comprises a ring segment-like member or an annular portion.

43. The kink element according to any one of claims 32 to 42, **characterized in that** a clamping device (762) is provided for fixedly clamping a milk tube at a side opposite to the bending edges.

## Revendications

1. Pot trayeur (100 ; 600) pour une installation de traite automatique, avec plusieurs zones de raccordement (103 ; 603) pour des tuyaux à lait flexibles (104 ; 604) et avec un axe longitudinal (105, 605), étant précisé que des premières zones d'extrémité des tuyaux à lait (104 ; 604) sont aptes à être fixées au pot trayeur (100 ; 600) en biais par rapport à l'axe longitudinal (105 ; 605) et qu'il est également prévu un élément de pliage (106 ; 606) avec un bord de flexion (109 ; 609) qui est espacé de la zone de raccordement (103 ; 603) et qui définit une zone de flexion dans le tuyau à lait (104 ; 604),
**caractérisé en ce que** chaque bord de flexion (109 ; 609) est mobile entre une première position dans laquelle il est positionné pour plier le tuyau à lait (104 ; 604) et une seconde position dans laquelle il est espacé du tuyau à lait (104 ; 604), de telle sorte que la zone de raccordement (103 ; 603) est accessible pour un montage et un démontage du tuyau à lait (104 ; 604).

2. Pot trayeur selon la revendication 1, **caractérisé en ce que** les premières zones d'extrémité des tuyaux à lait, en position fixée, définissent un angle de 10° ou plus avec l'axe longitudinal si celui-ci est orienté dans une direction qui est définie par la position de fonctionnement du pot trayeur.

3. Pot trayeur selon la revendication 1, **caractérisé en ce que** l'élément de pliage est mobile, de telle sorte que quelques bords de flexion ou tous les bords de flexion peuvent être amenés simultanément de la première à la seconde position.

4. Pot trayeur selon la revendication 3, **caractérisé en ce que** l'élément de pliage est monté pivotant sur le pot trayeur.

5. Pot trayeur selon l'une des revendications 1 à 4, **caractérisé en ce que** l'élément de pliage est fixé de manière amovible au pot trayeur.

6. Pot trayeur selon la revendication 1, **caractérisé en ce que** l'élément de pliage est apte à coulisser à la verticale, par rapport à la position de fonctionnement, pour passer de la première à la seconde position.

7. Pot trayeur selon l'une des revendications 1 à 6, **caractérisé en ce que** l'élément de pliage présente plusieurs segments de retenue de bord de flexion.

8. Pot trayeur selon la revendication 7, **caractérisé en ce que** chaque segment de retenue de bord de flexion est monté mobile sur l'élément de pliage.

9. Pot trayeur selon la revendication 8, **caractérisé en ce que** chaque segment de retenue de bord de flexion présente un mécanisme rotatif et/ou à bascule ou est conçu pour pouvoir coulisser, de telle sorte que chaque segment de retenue de bord de flexion est mobile entre la première et la seconde position.

10. Pot trayeur selon l'une des revendications 7 à 9, **caractérisé en ce que** l'élément de pliage comprend un moyen d'arrêt (740) grâce auquel chaque segment de retenue de bord de flexion peut être arrêté dans la première position.

11. Pot trayeur selon la revendication 10, **caractérisé en ce que** le moyen d'arrêt est conçu pour arrêter simultanément tous les segments de retenue de bord de flexion dans la première position.

12. Pot trayeur selon l'une des revendications 1 à 11, **caractérisé en ce que** l'élément de pliage comprend une zone déformable, de telle sorte que grâce à la déformation de cette zone déformable, il est apte à être fixé de manière amovible au pot trayeur et/ou à être arrêté dans la première position.

13. Pot trayeur selon la revendication 12, **caractérisé en ce que** la zone déformable comprend une matière élastique.

14. Pot trayeur selon l'une des revendications précédentes, **caractérisé en ce que** l'élément de pliage comprend au moins deux zones partielles qui sont aptes à être déplacées l'une par rapport à l'autre.

15. Pot trayeur selon la revendication 14, **caractérisé en ce que** les deux zones partielles sont aptes à être reliées par un élément de fermeture.

16. Pot trayeur selon la revendication 14, **caractérisé en ce que** les deux zones partielles sont aptes à être déplacées l'une par rapport à l'autre à l'aide d'une zone déformable qui les relie.

17. Pot trayeur selon la revendication 16, **caractérisé en ce que** la zone déformable présente une matière élastique et/ou un élément formant charnière et/ou un mécanisme à bascule.

18. Pot trayeur selon l'une des revendications 1 à 17, **caractérisé en ce que** l'élément de pliage comporte un corps de base élastique et des segments de bord de flexion fixés à celui-ci.

19. Pot trayeur selon la revendication 18, **caractérisé en ce que** le corps de base élastique est conçu de sorte qu'un changement de longueur et/ou un changement de forme et/ou un mouvement de torsion soient possibles dans le corps de base élastique.

20. Pot trayeur selon l'une des revendications 1 à 19, **caractérisé en ce qu'**il présente un raccord dans chaque zone de raccordement, le bord de flexion étant positionné devant le raccord de sorte que lorsqu'une force dirigée vers le bas par rapport à l'axe longitudinal et à la position de fonctionnement est exercée sur le tuyau à lait, celui-ci se plie le long du bord de flexion sans se détacher du raccord.

21. Pot trayeur selon la revendication 20, **caractérisé en ce que** le bord de flexion présente par rapport au raccord et dans le sens axial un écartement d'environ 1 mm à 15 mm.

22. Pot trayeur selon l'une des revendications 1 à 19, **caractérisé en ce que** chaque zone de raccordement présente une surface avec une ouverture destinée à recevoir le tuyau à lait.

23. Pot trayeur selon la revendication 22, **caractérisé en ce qu'**il comprend un tuyau à lait (104), et ce tuyau à lait (104) présente dans la première zone d'extrémité (123) à introduire dans l'ouverture une encoche (124), au moins par zones autour de sa circonférence.

24. Pot trayeur selon la revendication 23, **caractérisé en ce que** le diamètre extérieur (126) du tuyau à lait, dans la première zone d'extrémité (123) à introduire dans l'ouverture et au moins dans la zone de l'encoche (124), est plus grand que dans la zone centrale (125) dudit tuyau à lait.

25. Pot trayeur selon l'une des revendications 1 à 24, **caractérisé en ce que** l'élément de pliage présente une surface en équerre (110 ; 610) tournée vers le tuyau à lait.

26. Pot trayeur selon l'une des revendications 23 à 25, **caractérisé en ce que** le tuyau à lait présente une structure en forme de soufflet.

27. Pot trayeur selon la revendication 26, **caractérisé en ce que** le tuyau à lait présente entre la zone d'extrémité introduite dans l'ouverture et la structure en forme de soufflet une zone non structurée, de telle sorte qu'en présence d'une contrainte de flexion, la courbure du tuyau à lait se produit essentiellement à partir de la structure en forme de soufflet.

28. Pot trayeur selon la revendication 27, **caractérisé en ce que** le bord de flexion est positionné de sorte que lorsqu'une force dirigée vers le bas par rapport à la position de fonctionnement agit sur le tuyau à lait, le bord de flexion est en contact avec le tuyau à lait au niveau de la transition entre la zone structurée et la zone en forme de soufflet, ou dans la zone en forme de soufflet.

29. Pot trayeur selon l'une des revendications 1 à 28, **caractérisé en ce qu'**il est prévu un dispositif de serrage (662) pour bloquer le tuyau à lait en position fixée, derrière le bord de flexion dans le sens d'écoulement, au moins sur le côté opposé au bord de flexion.

30. Pot trayeur selon la revendication 29, **caractérisé en ce qu'**il comporte un raccord (630) dans la zone de raccordement (603), et le dispositif de serrage (662) est conçu pour éviter quasiment la formation d'un interstice entre le raccord (630) et le tuyau à lait (604), en position fixée, pendant le fonctionnement.

31. Pot trayeur selon la revendication 29, **caractérisé en ce que** le dispositif de serrage (662), au niveau de l'élément de pliage (606), est fixé et conçu pour entourer au moins partiellement le tuyau à lait, en position fixée.

32. Elément de pliage (106 ; 606 ; 706) à utiliser avec un pot trayeur (100 ; 600) pourvu d'une zone de raccordement (103 ; 603) disposée en biais, cet élément de pliage (106 ; 606 ; 706) comportant un segment de pliage (708) avec un bord de flexion (109 ; 609 ; 709) et étant conçu pour pouvoir être monté sur le pot trayeur de manière à être mobile, en position montée, entre une première position dans laquelle le bord de flexion (109 ; 609 ; 709) est positionné pour plier le tuyau à lait (104 ; 604) et une seconde position dans laquelle il est espacé du tuyau à lait (104 ; 604) de telle sorte que la zone de raccordement (103 ; 603) est accessible pour un montage et un démontage du tuyau à lait (104 ; 604).

33. Elément de pliage selon la revendication 32, **caractérisé en ce qu'**il est monté de manière amovible sur la pot trayeur.

34. Elément de pliage selon la revendication 32 ou 33, **caractérisé en ce qu'**il présente un corps de base (707) auquel le segment de pliage est fixé.

35. Elément de pliage selon la revendication 34, **caractérisé en ce qu'**il est fixé de manière mobile au corps de base.

36. Elément de pliage selon l'une des revendications 32 à 35, **caractérisé en ce que** plusieurs segments de pliage sont prévus sur le corps de base.

37. Elément de pliage selon l'une des revendications 32 à 36, **caractérisé en ce qu'**il est mobile entre une première position et une seconde position.

38. Elément de pliage selon la revendication 37, **caractérisé en ce que** le segment de pliage est apte à être amené de la première à la seconde position à l'aide d'un mécanisme rotatif et/ou à bascule et/ou grâce à l'élasticité propre du corps de base et/ou par coulissement.

39. Elément de pliage selon l'une des revendications 32 à 38, **caractérisé en ce que** le corps de base comporte un mécanisme de fermeture pour la fixation du corps de base au pot trayeur.

40. Elément de pliage selon la revendication 39, **caractérisé en ce que** le corps de base comporte une zone élastique et/ou un élément formant charnière.

41. Elément de pliage selon l'une des revendications 32 à 40, **caractérisé en ce qu'**il est prévu plusieurs segments de pliage et le corps de base est élastique, de telle sorte que celui-ci peut être fixé au pot trayeur grâce à l'élasticité propre.

42. Elément de pliage selon l'une des revendications 32 à 41, **caractérisé en ce que** le corps de base comporte une partie en forme de segment annulaire ou une zone annulaire.

43. Elément de pliage selon l'une des revendications 32 à 42, **caractérisé en ce qu'**il est prévu un dispositif de serrage (762) pour bloquer un tuyau à lait sur un côté opposé au bord de flexion.
